# EUROPEAN PATENT SPECIFICATION

(11) **EP 2 171 263 B1**
(45) Date of publication and mention of the grant of the patent: **18.05.2016**
(21) Application number: 08762255.1
(22) Date of filing: 04.06.2008
(51) Int. Cl.: F03B 13/14, F03B 13/18

(54) **WAVE ENERGY CONVERTER**
WELLENENERGIEWANDLER
CONVERTISSEUR D'ÉNERGIE DES VAGUES

(30) Priority: 05.06.2007 GB 0710689
(43) Date of publication of application: 07.04.2010
(73) Proprietor: AWS Ocean Energy Limited, Ross-Shire IV17 OUP (GB)
(72) Inventor: FITZGERALD, John, Ross-Shire IV17 OUP (GB)
(74) Representative: Docherty, Andrew John
(86) International application number: PCT/GB2008/001902
(87) International publication number: WO 2008/149084

(56) References cited:
- WO-A-95/08060
- WO-A-97/37123
- GB-A- 2 169 684
- US-A- 4 203 294
- US-A- 5 179 837
- US-B1- 6 617 705
- US-B1- 6 812 588

## Description

### FIELD OF THE INVENTION

The present invention relates to an apparatus for converting energy from waves in a body of water.

### BACKGROUND TO THE INVENTION

Significant efforts are being made within the energy industry to provide viable methods of extracting energy from renewable sources, such as from waves. Numerous designs of wave energy apparatus have been proposed and range from floating or heaving devices to devices which in use are fully submerged. For example, WO 2006/109024 describes a float-type arrangement in which one or more floating members are suspended from a support structure over a body of water such that heaving motion of the floating members by wave action is used for power generation.

A device for wave energy conversion incorporating a submerged system is disclosed in WO 99/11926 which is based on the hydrodynamic principle that the ambient water pressure in a region below a passing wave varies. In this prior art arrangement the device comprises an air filled container formed of a lower part which is fixed relative to the seabed and an upper part which is displaceable in a vertical direction relative to the lower part. As such, relative movement of the upper and lower parts varies the working gas volume of the container. In use, the upper part is caused to be displaced in a vertical direction in response to differences between the external water pressure and internal air pressure, wherein the relative movement of the parts of the container is exploited as useful work to drive a linear generator.

More specifically, when the described prior art device is in an equilibrium position the ambient water pressure (and the weight of the upper part of the container) will be balanced by the internal air pressure within the container. An approaching wave crest will result in a local increase in water pressure and thus create a pressure imbalance which drives the upper part of the container downwards, reducing the air volume until the air pressure is equalised with the external water pressure. An approaching wave trough, on the other hand, results in a local decrease in water pressure which causes the upper part of the container to be driven upwards by the internal air pressure to again achieve equilibrium.

It is well documented that submerged devices operating in the manner described above can absorb wave energy most effectively when operated in wave periods close to the natural frequency of the device, i.e., when operated at resonant frequencies. In WO 99/11926, the air enclosed within the container forms a spring and the upper part provides corresponding mass to thus establish a resonant system, wherein a ballast arrangement is provided for varying the internal volume of the container (and thus spring constant) to tune the natural frequency of the system to the predominant wave frequency. The ballast arrangement utilises pumps to vary a water level within the container to change the working volume of the enclosed air.

In known systems of the type described above the structure is such that a low pressure gas spring is established which therefore necessitates a large volume in order to achieve the required spring constant. Gas pressures of around 2 to 3 bar are typical. This requires the provision of very large structures to contain the gas volume which creates problems in terms of handling, anchoring, bearing arrangements, exposure to very large in-situ loading, and the like. Additionally, it is recognised that the useful volume in terms of energy capture is the actual swept volume, which in known
arrangements is significantly less than the entire air volume. The additional volume is not fundamentally required to absorb wave power and is required only to provide the required spring constant for resonant operation.

Furthermore, in known arrangements the upper floating component of the container is required to be heavy in order to provide the required working volume air pressure such that the water pressure does not result in flooding of the working volume. However, this results in a high inertia oscillator which will therefore have a narrow-banded response characteristic, which implies that known devices will not respond well to broad-banded sea-spectra which often occur.

WO9737123 describes a wave energy converter in which a large piston is situated below a wave surface such that hydrostatic pressure of a water column and the weight of the piston balance a pressure of gas compressed in a pressure chamber. A piston rod of the large piston is directly and coaxially coupled with a piston rod of a small piston such that the small piston follows the movements of the large piston. The rod, piston and a cylinder having a front plate form a hydraulic cylinder. The liquid displaced by the small piston is connected to a rectifying circuit and via a one way valve to an inlet of hydraulic displacement motor.

GB2169684 describes controlling a resonant means, which may be a mechanical spring or a gas spring, that are switchable between two states that have different rates of dependence of a restoring force upon displacement from equilibrium.

It is among the objects of the present invention to obviate or at least mitigate one or more of the above noted and other problems in the prior art.

### SUMMARY OF THE INVENTION

According to a first aspect of the present invention there is provided an apparatus for converting energy from wave motion in water according to claim 1, said apparatus comprising:
a wave activated assembly comprising an enclosed chamber and a wave actuated member defining a wall portion of said chamber, wherein said wave actuated member is adapted to be displaced in response to wave motion to vary the volume of the enclosed chamber;
a motion control assembly comprising a displaceable member coupled to the wave actuated member and forcing means adapted to apply a force on the displaceable member; and
a power take off assembly operable in response to movement of the wave actuated member.

Preferably, the apparatus is adapted to be at least partially submerged within a body of water. In embodiments of the invention the entire apparatus may be adapted to be submerged.

Preferably, the wave actuated member is adapted to be exposed to ambient conditions below a surface level of a body of water such that ambient water pressure variations will effect movement of said wave actuated member. Accordingly, in use, displacement of the wave actuated member by changes in ambient water pressure will advantageously operate the power take off assembly to produce a useful energy output.

The wave actuated member may be adapted to be displaced in a single dimension. In alternative embodiments the wave actuated member may be displaceable in multiple dimensions.

In one embodiment, the wave actuated member and displaceable member may be coupled via a connecting member, preferably an elongate connecting member, such as a shaft, rod or the like. A single connecting member may be provided, or alternatively a plurality of members may be provided. The connecting member is preferably rigid, but in some embodiments may exhibit a degree of flexibility or elasticity. In a preferred embodiment, the wave actuated member and displaceable member are arranged to reciprocate along a common line of motion, preferably along a vertical line of motion. In this arrangement the wave actuated member and displaceable member may be located one on top of the other. Alternative embodiments may utilise a horizontal line of motion, or any inclined line of motion. The wave actuated member and displaceable member may alternatively be arranged to reciprocate along different lines of motion, which lines of motion may be mutually parallel. In this arrangement the wave actuated member and displaceable member may be located side by side.

Advantageously, at least a portion of a wall structure of the enclosed chamber may be rigid. Alternatively, or additionally, at least a portion of the wall structure of the enclosed chamber may be flexible. The wall structure may comprise a plastic material, elastic material or the like, or any suitable combination thereof. Advantageously, the use of an elastic or flexible material in the wave activated assembly allows for absorption of waves without the need for a bearing surface to control the kinematics of the wave actuated member within the wave activated assembly.

Preferably, the wave activated assembly comprises a reference member, wherein said reference member and the wave actuated member collectively define the enclosed chamber. Advantageously, the wave actuated member is mounted to be displaced relative to said reference member so as to effect volume changes of the enclosed chamber.

The reference member may be fixed such that relative movement between the wave actuated member and reference member is achieved by movement only of the wave actuated member. Alternatively, the reference member may be displaceable such that relative movement is achieved by both said members.

Preferably, the wave activated assembly further comprises a sealing arrangement disposed between the wave actuated member and reference member. Advantageously, the sealing arrangement is adapted to fluidly isolate the enclosed chamber from the ambient environment.

In embodiments of the invention the sealing arrangement may comprise a sliding seal adapted to be positioned between corresponding inner and outer surfaces of the wave actuated member and the reference member. The sliding seal may be provided by interference contact between the wave actuated and reference members. Alternatively, or additionally, the sealing arrangement may comprise a sealing member disposed between the respective members, such as an o-ring, piston ring or the like.

In alternative embodiments of the invention a clearance gap may be defined between the wave actuated member and reference member, wherein a sealing arrangement extends across said clearance gap and may comprise a flexible member, such as a membrane or the like. The flexible member may comprise a plastic material, or alternatively, or additionally, may comprise an elastic material. The sealing arrangement form part of a diaphragm structure.

The sealing arrangement may comprise a rolling seal. The rolling seal may be in the form of an invertible tubular body secured between the wave actuated member and the reference member, such that movement of the wave actuated member will be permitted by inversion of the tubular body.

The sealing arrangement may alternatively, or additionally, comprise a bellows seal.

In embodiments of the invention the wave actuated assembly may define a piston arrangement wherein at least one of the wave actuated member and reference member defines a cylinder and the other of the wave actuated member and reference member defines a piston. In alternative embodiments, the wave actuated member and reference member may be provided in the form of opposable cup members, wherein one cup member is slidably received in the other cup member.

The forcing means may be adapted to apply a variable force on the displaceable member. In a preferred embodiment, the forcing means is adapted to apply a force which is variable in response to movement of said displaceable member. In this arrangement, the force applied on the displaceable member by the forcing means may be defined as a function of the displacement of said member. In use, the force applied on the displaceable member may be varied by movement of said member to balance the force applied on the wave actuated member by the ambient water pressure. Accordingly, in this arrangement, variations in ambient water pressure will vary the force applied to the wave actuated member to effect displacement thereof, wherein corresponding movement of the displaceable member will cause the forcing means to vary the force applied to said displaceable member until equilibrium of the forces applied on the apparatus is achieved. Accordingly, cyclic variations in local ambient water pressure caused by passing surface waves will result in reciprocating motion of the wave actuated member and displaceable member, wherein said reciprocating motion may be utilised as useful work to operate the power take off assembly.

Preferably, the forcing means comprises spring means adapted to apply a spring force on the displaceable member.

The spring means may comprise a mechanical spring, such as a coil spring, elastically deformable member or the like.

Alternatively, or additionally, the spring means may comprise fluid spring means, such as pneumatic spring means, hydraulic spring means or any suitable combination thereof.

The motion control assembly preferably comprises a primary chamber, wherein the displaceable member defines a wall portion of said primary chamber such that movement of said displaceable member varies the volume of said primary chamber. The primary chamber may be adapted to receive a fluid such that motion of the displaceable member acts against the fluid, and vice versa, wherein the fluid and displaceable member form part of the fluid spring means.

In one embodiment, the fluid spring means may comprise a gas adapted to be compressed and expanded by motion of the displaceable member. Accordingly, the gas and displaceable member may collectively define a gas spring assembly. In use, an increasing force applied on the wave actuated member as a result of increasing water pressure will effect movement of the displaceable member to compress the gas and increase the force applied by the gas on the displaceable member to balance the water pressure force. Similarly, a decreasing force as a result of decreasing water pressure will cause the gas to expand and thus move the displaceable member and wave actuated member until the forces are again balanced.

The displaceable member may be adapted to directly compress the gas. In this embodiment the gas may be contained within the primary chamber of the motion control assembly such that direct compression and expansion of the gas may be achieved by movement of the displaceable member.

Alternatively, or additionally, the displaceable member may be adapted to indirectly compress the gas. In one embodiment, the motion control assembly may comprise an incompressible fluid within the primary chamber, wherein the incompressible fluid is adapted to be displaced by the displaceable member to effect or permit selective compression and expansion of the gas. The motion control assembly may further comprise an auxiliary chamber comprising the gas, wherein the primary and auxiliary chambers are in mutual fluid communication such that the incompressible fluid may be displaced between the chambers upon movement of the displaceable member to permit compression and expansion of the gas.

The incompressible fluid may comprise mineral oil, for example.

The gas pressure within the motion control assembly may be significantly elevated above the local ambient pressure acting on the wave activated member. This arrangement may be permitted by isolating the gas pressure from acting directly on the wave actuated member. Advantageously, the gas contained within the motion control assembly may be maintained at a pressure greater than, for example, 50 bar, more preferably greater than 100 bar, and most preferably greater than 150 bar. In a currently preferred embodiment the gas pressure may be around 200 bar. It should be noted that the pressures identified are average pressures when the apparatus of the present invention is in use, and that the pressures will fluctuate as the displaceable member reciprocally strokes to compress and expand the gas.

The gas may comprise nitrogen, air or the like.

In embodiments of the invention the motion control assembly may comprise a plurality of displaceable members coupled to one or a plurality of wave actuated members.

Preferably, the surface area of the wave actuated member which in use is exposed to ambient conditions to apply a force in the required direction is larger than the surface area of the displaceable member which acts against the gas. This arrangement advantageously permits the size of the apparatus to be minimised. Additionally, this arrangement, in combination with a gas pressure selected to be greater than the ambient water pressure, enables a sufficient gas spring constant to be achieved to permit efficient and effective operation of the apparatus, while utilizing a much smaller volume than currently known systems.

The fluid spring means may comprise a dynamically controlled hydraulic spring. In this embodiment a substantially incompressible fluid, such as mineral oil, may be selectively and controllably driven against the displaceable member to simulate a spring force acting on said member. In one arrangement the motion control assembly may comprise a substantially incompressible fluid adapted to be driven between the primary chamber and a fluid reservoir via fluid drive means, such as a pump, or the like.

The motion control assembly may comprise a controller adapted to control the drive means. The controller may be adapted to receive input signals providing data relating to the state of the apparatus, such as the position, velocity, acceleration or the like of the wave activated and displaceable members, and utilise this data to control the drive means in the desired manner. The controller may comprise a control algorithm adapted to manipulate input data to provide the desired controlled output of the drive means.

The fluid reservoir may comprise at least one auxiliary chamber defined above. In this arrangement the fluid spring means may comprise a combination of a gas spring and a dynamically controlled hydraulic spring.

Advantageously, at least a portion of the motion control device is positioned externally of the enclosed chamber of the wave activated assembly. Alternatively, or additionally, at least a portion of the motion control device is positioned internally of the enclosed chamber.

Preferably, the forcing means of the motion control device comprises spring means and further comprises means for varying the spring constant of said spring means. This arrangement advantageously permits the effective natural frequency of the apparatus to be selected, altered or tuned to coincide with, for example, a predominant wave frequency such that the apparatus may operate under resonant conditions and maximise the energy extracted from passing waves.

Advantageously, in embodiments of the invention comprising a gas spring, means may be provided for varying the compression ratio/working volume of the gas within the motion control device to thus vary the effective gas spring constant. The means for varying the compression ration may comprise means for varying the volume of the gas within the motion control assembly. Such means may comprise a moving barrier acting on said gas. The moving barrier may comprise a solid structure. Alternatively, and in a preferred embodiment, the moving barrier is established by a body of liquid, wherein the moving barrier is defined at a liquid-gas interface between the gas volume and the body of liquid.

According to the invention, the enclosed chamber of the wave activated assembly is evacuated to define a vacuum. It should be understood that the term vacuum as used herein may include a partial vacuum such that the pressure within said enclosed chamber is lower than the ambient pressure within which the apparatus of the present invention is intended for use. Advantageously, evacuating and maintaining a vacuum within the enclosed chamber eliminates or substantially minimises any gas spring effect being established within the enclosed chamber during stroking motion of the wave actuated member. Accordingly, this arrangement advantageously ensures that all or at least the majority of a spring effect applied on the apparatus is provided by the forcing means.

Accordingly, isolating any gas spring effect from the enclosed chamber and accommodating the forcing means separately from the wave activate assembly contrasts with the prior art in which an upper float member which is reciprocated by the effect of a passing wave acts directly on an enclosed gas to establish a gas spring. In such prior art arrangement, as described above, only a small proportion of the required gas volume is used as effective stroking volume to capture the associated wave energy. The present invention, on the other hand, permits the enclosed chamber to be formed and arranged to accommodate the necessary stroking of the wave actuated member without requiring additional volume to accommodate any forcing means, such as gas to achieve a spring effect. As such, the total structural volume of the first cylinder can be reduced to as close as possible to the swept volume permitting a significantly smaller device or apparatus to be provided, with concomitant benefits.

Furthermore, in prior art arrangements the upper floater is required to have a certain minimum mass to ensure a certain gas pressure is achieved. However, in the present invention, the elimination of a substantial and heavy upper float member not only minimises structural volume but also reduces the inertia of the apparatus such that the apparatus may be responsive to a broader frequency range or band.

The power take off assembly may be mechanically operated, hydraulically operated, pneumatically operated or the like, or any suitable combination thereof.

The power take off assembly may be adapted to generate electricity. Alternatively, or additionally, the power take off assembly may be adapted to pressurise a fluid and/or provide a motive force for a solid object or a fluid. For example, the power take off assembly may comprise a pump adapted to pump a fluid, such as sea water or the like. This arrangement may advantageously be used in a number of applications, such as pumping seawater into a downhole formation, such as a hydrocarbon bearing formation to displace formation fluids.

In embodiments of the present invention the power take off assembly may be adapted to be directly driven by reciprocating motion of the wave actuated member. For example, the power take off assembly may comprise an electrical linear generator or the like.

Alternatively, or additionally, the power take off assembly may be adapted to pressurise a fluid to be used directly, for example in a pumping application as noted above. Alternatively, or additionally, the pressurised fluid may be used indirectly, for example to drive a mechanical assembly, such as a hydraulic motor, turbine or the like to provide rotational shaft work. The rotational shaft work may be utilised to drive an electric generator, for example.

In one embodiment, the power take off assembly may comprise a piston assembly incorporating a piston slidably mounted within a cylinder, wherein the piston is coupled to the wave actuated member to move therewith. Advantageously, a fluid may be provided within the cylinder such that motion of the piston will cause fluid to be displaced to and from the cylinder. The power take off assembly may further comprise an external mechanical assembly, such as a hydraulic motor, adapted to be driven by fluid displaced from the cylinder. In one embodiment a single acting piston assembly may be provided. Alternatively, or additionally, a double acting cylinder may be provided.

A power take off assembly incorporating a piston assembly as described above may form part of the motion control device, wherein the displaceable member of the motion control assembly defines a piston of the power take off assembly.

The power take off assembly may form part of a dynamically controlled hydraulic spring, wherein the hydraulic motors may be selectively utilised as pumps to control the rate of fluid exchange with the cylinder. In this arrangement the power take off assembly may comprise a power source, such as grid electricity, a flywheel, a charged accumulator or the like for driving the hydraulic motors.

The power take off assembly may comprise a plurality of piston assemblies. This arrangement may provide a degree of redundancy and may assist to achieve higher efficiency. That is, under moderate operating conditions, some piston assemblies may be rendered idle or non-operational such that power is absorbed using fewer piston assemblies for improved efficiency.

The power take off assembly may be at least partially located externally of the working chamber of the wave activated assembly. Alternatively, or additionally, the power take off assembly may be at least partially located internally of the working chamber.

Advantageously, the apparatus of the present invention may comprise inertia compensation means adapted to compensate for inertia within the apparatus. The inertia compensation means may advantageously reduce the inertia of the apparatus and thus improve the dynamic response of the apparatus. The inertia compensation means may be associated with the power take off assembly and may be adapted to cause the apparatus to dynamically behave as though it is lighter and as such improve the dynamic response. Preferably, a control algorithm is associated with the inertia compensation means and the required forces applied to the apparatus to cause changes in the effective inertia of the apparatus may be delivered through the power take off assembly.

Advantageously, the apparatus may further comprise a stroke control algorithm adapted to ensure that the wave actuated member does not exceed a predefined stroke limit, which would otherwise potentially cause damage to the apparatus. This algorithm may comprise a number of inputs, such as member position, velocity, acceleration or the like and utilise such inputs to calculate or determine the total mechanical energy in the apparatus (both kinetic and potential). This calculated value may be compared to a reference maximum mechanical energy that would result in the stroke exceeding maximum values. The algorithm may therefore be adapted to establish the rate of change of mechanical energy within the apparatus. The algorithm may also be adapted to request an appropriate braking force to be applied, for example utilising the power take off assembly to apply a force on the apparatus, as described above. The control system established by applying the algorithm advantageously feeds back the mechanical energy and rate of change of energy and is not restricted to only position and velocity as a control basis. Such a control arrangement as described herein requires no future knowledge to implement and the braking can be achieved regeneratively such that the power generated may be utilised.

According to a second aspect of the present invention, there is provided a method of converting energy from wave motion in water according to claim 15, said method comprising the steps of:
providing an apparatus according to claim 1 and submerging at least a portion of the apparatus within water experiencing wave motion;
permitting the wave actuated member to move in response to wave motion; and
extracting energy via the power take off assembly.

### BRIEF DESCRIPTION OF THE INVENTION

These and other aspects of the present invention will now be described, by way of example only, with reference to the accompanying drawings, in which:
Figure 1 is a diagrammatic representation of an apparatus for converting energy from wave motion in water in accordance with an embodiment of the present invention;
Figure 2 is a diagrammatic representation of an apparatus for converting energy from wave motion in water in accordance with an alternative embodiment of the present invention;
Figure 3 is a diagrammatic representation of an apparatus for converting energy from wave motion in water in accordance with another alternative embodiment of the present invention;
Figure 4 is a diagrammatic representation of a portion of an apparatus for converting energy from wave motion in water in accordance with a further alternative embodiment of the present invention; and
Figure 5 is a diagrammatic representation of the apparatus of Figure 4 shown in an alternative configuration.

### DETAILED DESCRIPTION OF THE INVENTION

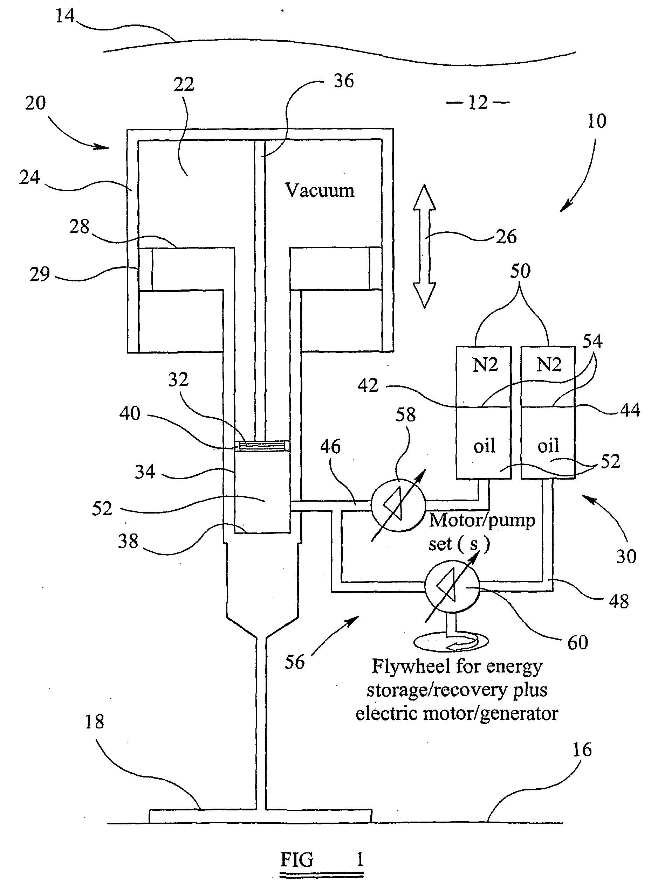

Reference is first made to Figure 1 of the drawings in which there is shown a diagrammatic representation of an apparatus for converting energy from wave motion in water in accordance with an embodiment of the present invention. The apparatus, generally identified by reference numeral 10, in use, is adapted to be submerged within a body of water 12 which experiences surface waves 14. The apparatus 10 is mounted on the seabed 16 via a suitable anchor 18.

The apparatus 10 includes a wave activated assembly 20 which comprises an enclosed chamber 22 and a wave actuated member 24 which defines upper and side wall portions of said chamber 22. In use, and as described in further detail below, the wave actuated member 24 is adapted to be displaced or reciprocated in the direction of arrow 26 in response to wave motion to vary the volume of the enclosed chamber 22.

In the embodiment shown in Figure 1, the wave activated assembly 20 further comprises a fixed member in the form of a piston body 28 which is fixed relative to the seabed 16, wherein the wave actuated member 24 is provided in the form of a cylinder which is movable relative to said piston body 28. Accordingly, the wave activated assembly 20 may be further defined as a piston assembly.

A sealing arrangement 29 is provided between the wave actuated member 24 and the piston body 28 to fluidly isolate the chamber 22 from the body of water 12. In the embodiment shown the sealing arrangement 29 is provided in the form of a sliding seal, but in other embodiments, as will be discussed below, a rolling seal arrangement may be utilised.

The apparatus 10 further comprises a motion control assembly 30 which incorporates a displaceable member 32 in the form of a piston which is slidably mounted within a cylinder 34, which cylinder 34 is secured to and extends downwardly from the piston body 28. In the embodiment shown a portion of the space defined by the cylinder 34 forms part of the chamber 22. The displaceable member 32 is rigidly secured to the wave actuated member 24 via an elongate rod 36 such that displacement of the wave actuated member 24 in response to wave motion will cause corresponding displacement of the displaceable member 32. The displaceable member 32 and the cylinder 34 collectively define a primary chamber 38. A sealing arrangement 40 is provided between the displaceable member and the cylinder 34 to fluidly isolate the primary chamber 38 of the motion control assembly 30 from the chamber 22 of the wave activated assembly.

The motion control assembly 30 further comprises two auxiliary cylinders 42, 44 which are both in fluid communication with the primary chamber 38 via respective fluid conduits 46, 48. Each of the auxiliary cylinders 42, 44 comprises a volume of nitrogen gas 50 which surmounts and is trapped by a volume of oil 52, which oil 52 is also contained within the primary chamber 38. Accordingly, movement of the displaceable member 32 as a result of wave motion will cause the oil 52 to be displaced between the primary chamber 38 and auxiliary cylinders 42, 44 via the respective conduits 46, 48. This arrangement therefore causes the oil level 54 within the auxiliary cylinders 42, 44 to vary, thus compressing and/or expanding the nitrogen gas 50. Accordingly, the pressure of the nitrogen gas 50 within the auxiliary cylinders 42, 44 ultimately applies a force on the displaceable member 32 via the oil 52, as will be discussed in further detail below.

In the embodiment shown the nitrogen gas 50 is maintained at a pressure of approximately 200 bar. However, it should be appreciated that the pressure of the nitrogen gas 50 will vary according to the oil level 54 within the auxiliary cylinders 42,44.

The arrangement of the motion control assembly 30 may therefore define a gas spring which provides a spring force ultimately acting against the motion of the wave actuated member 24 and displaceable member 32. The spring force applied on the displaceable member 32 may be defined as a function of the displacement of said member 32. In use, therefore, the force applied on the displaceable member 32 will be varied by movement of said member 32 to balance the force applied on the wave actuated member 24 by the ambient water pressure, which will be described in further detail immediately below.

In use, an approaching wave crest will result in an increasing ambient water pressure and thus an increasing force being applied to the wave actuated member 24 to displace this in a downward direction. Corresponding downward displacement of the displaceable member 32 will increase the oil level 54 within the auxiliary cylinders 42, 44 and thus effect compression of the gas 50. Compression of the gas 50 in this manner will therefore result in an increasing reaction force being applied against the displaceable member 32. Downward movement of the wave actuated member 24 will continue until the forces applied on the wave actuated member 24 by the ambient water pressure and on the displaceable member 32 by the gas 50, are in equilibrium.

An approaching wave crest, on the other hand, will be associated with a decreasing ambient water pressure and thus a decreasing force being applied by the water on the wave actuated member 24. This will therefore establish a force imbalance in that the force applied on the displaceable member 32 by the gas 50 will effect upward movement of the displaceable member 32 and thus of the wave actuated member 24 until the gas 50 is sufficiently expanded to again achieve force equilibrium.

Accordingly, cyclic variations in local ambient water pressure caused by passing surface waves will result in reciprocating motion of the wave actuated member 24 and displaceable member 32, wherein such reciprocating motion may be utilised as useful work, as described below.

The apparatus 10 further comprises a power take-off assembly 56 which comprises hydraulic motors 58, 60 disposed along the fluid conduits 46, 48 respectively. The hydraulic motors 58, 60 are adapted to be driven by the oil 52 displaced between the primary chamber 38 and the auxiliary cylinders 42, 44 to produce rotational shaft work.

The power take-off assembly 56 further comprises one or more electric generators (not shown) adapted to be driven by the hydraulic motors 58, 60.

The hydraulic motors 58, 60 may be adapted to be operated in a pumping configuration to therefore dynamically control displacement of oil 52 to and from the primary chamber 38. This arrangement may therefore by utilised to establish a dynamically controlled fluid spring. That is, a dynamic force may be applied on the displaceable member 32 to simulate a spring force during movement of said member 32 by controlling communication of oil to and from the primary chamber 38. In this arrangement, the power take-off assembly 56 may form part of the motion control assembly 30 and may eliminate the requirement for the gas spring arrangement.

Furthermore, it should be noted that the ability to operate the hydraulic motors 58, 60 in a pumping configuration advantageously permits the power take-off assembly 56 to be utilised as an effective inertia compensation means by advantageously reducing the effective inertia of the apparatus and thus improve its dynamic response.

In the embodiment shown in Figure 1 the enclosed chamber 22 is evacuated to define a vacuum to remove or minimise any gas spring effect within said chamber 22.

Additionally, the surface area of the wave actuated member 24 exposed to water pressure force is greater than the surface area of the displaceable member 32 exposed to the gas pressure. This arrangement, in combination with maintaining the gas 50 at an elevated pressure, permits efficient and proper operation of the apparatus 10 while minimising its structural volume.

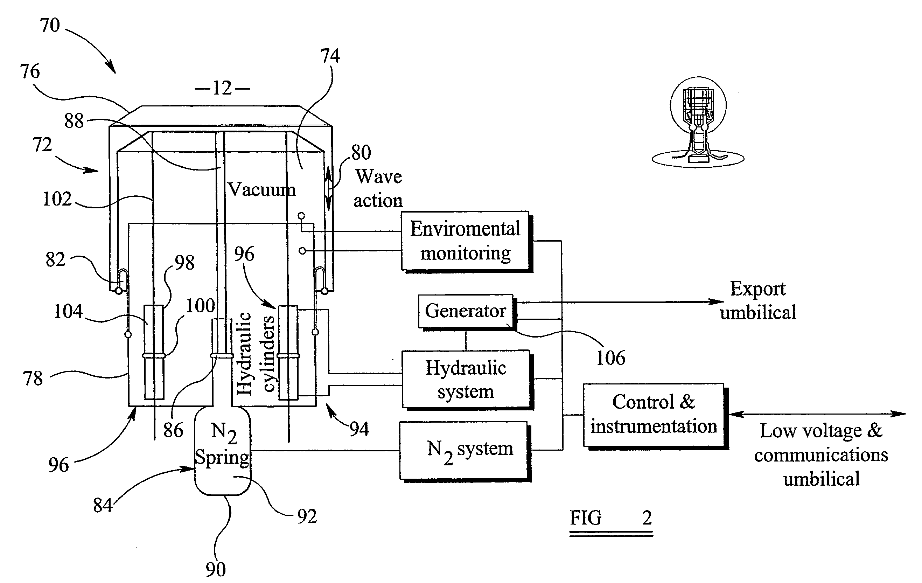

Reference is now made to Figure 2 of the drawings in which there is shown a diagrammatic representation of an apparatus for converting energy from wave motion in water in accordance with an alternative embodiment of the present invention.

The apparatus, generally identified by reference numeral 70, is adapted to be submerged within a body of water 12 and in the same manner as described above in relation to the first embodiment utilises the effective variations in ambient water pressure resulting from passing surface waves.

The apparatus 70 comprises a wave actuated assembly 72 which incorporates an evacuated enclosed chamber 74 defined by a wave actuated member 76 and a fixed member 78, wherein the wave actuated member 76 is movable relative to the fixed member 78 in the direction of arrows 80 in response to wave motion.

A sealing arrangement in the form of a rolling seal 82 is provided between the wave actuated member 76 and fixed member 78 wherein the rolling seal 82 is formed by an invertible tubular member.

Accordingly, in use, wave motion within the body of water 12 will displace the wave actuated member 76 along the direction identified by arrow 80 relative to the fixed member 78 to therefore vary the volume of the enclosed chamber 74.

The apparatus 70 further comprises a motion control assembly 84 which incorporates a displaceable member 86, which member 86 is rigidly secured to the wave actuated member 76 via an elongate rod 88 such that movement of the wave actuated member 76 causes corresponding movement of the displaceable member 86.

The motion control assembly 84 further comprises a canister 90 which contains compressed nitrogen gas 92, wherein the displaceable member 86 is adapted to be movable within the canister 90 to effect compression and expansion of the gas 92. The function of the gas 92 is similar to that described in the embodiment shown in Figure 1 and as such no further description will be provided except to say that the gas 92 applies a spring force against the displaceable member 86 to balance the force applied against the wave actuated member 76 by ambient water pressure to permit reciprocating motion to be achieved.

The apparatus 70 further comprises a power take-off assembly 94 which incorporates a plurality of hydraulic piston arrangements 96. Each hydraulic piston arrangement 96 comprises a cylinder 98 within which is mounted a piston body 100, wherein the piston body 100 is rigidly secured to the wave actuated member 76 via an elongate rod 102. Accordingly, movement of the wave actuated member 76 will cause corresponding movement of the piston body 100 within the cylinder 98.

Each cylinder 98 is filled with oil 104 on either side of the piston body 100, wherein the oil 104 is adapted to be displaced from the cylinder 98 by stroking motion of the piston body 100. Oil 104 displaced from the cylinder in this manner may be utilised to drive a hydraulic motor (not shown) which in turn may be used to drive an electric generator 106.

In a similar manner as described above in connection with the first embodiment, the hydraulic motors (not shown) may be adapted to be operated in a pumping configuration to establish dynamic control of the flow of oil 104 to and from the cylinders 98. Such dynamic control may be utilised as inertia compensation means, or alternatively, or additionally to establish a spring force to act against movement of the wave actuated member 76.

As shown in Figure 2, the piston arrangements 96 of the power take-off assembly 94 are positioned within the enclosed chamber 74.

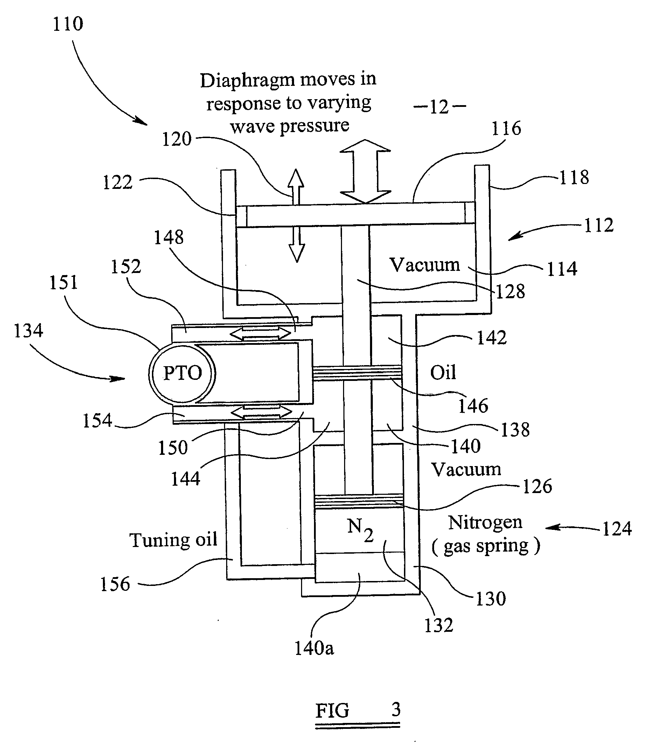

Reference is now made to Figure 3 of the drawings in which there is shown a diagrammatic representation of an apparatus for converting energy from wave motion in water in accordance with an alternative embodiment of the present invention.

The apparatus, generally identified by reference numeral 110, in use, is adapted to be submerged within a body of water 12 such that the apparatus 110 may be operated in response to ambient pressure variations due to passing surface waves.

The apparatus 110 comprises a wave actuated assembly 112 which incorporates an enclosed evacuated chamber 114 defined by a wave actuated member 116 and a fixed member 118. In use, the wave actuated member 116 is adapted to be reciprocated in the direction identified by arrow 120 relative to the fixed member 118 to vary the volume of the chamber 114.

In the embodiment shown in Figure 3, the wave actuated member 116 is a piston body, and the fixed member 118 is a cylinder.

A sealing arrangement in the form of a sliding seal 122 is provided between the wave actuated member 116 and fixed member 118 to fluidly isolate the chamber 114 from the body of water 12.

The apparatus 110 further comprises a motion control assembly 124 which incorporates a displaceable member 126 rigidly coupled to the wave actuated member 116 via an elongate rod 128 such that reciprocating motion of the wave actuated member 116 will cause corresponding motion of the displaceable member 126.

The motion control assembly further comprises a cylinder 130 within which the displaceable member 126 is mounted. A volume of pressured nitrogen gas 132 is contained within the cylinder 130 and acts against the displaceable member 126. As such, the displaceable member 126, cylinder 130 and gas 132 collectively define a gas spring which applies a spring force against the displaceable member 126 which is proportional to the displacement of said member 126.

The apparatus 110 further comprises a power take-off assembly 134 which is generally interposed between the wave actuated assembly 112 and the motion control assembly 124. The power take-off assembly 134 is adapted to utilise the work generated by the reciprocating motion of the wave actuated member 116 and displaceable member 126.

The power take-off assembly 134 comprises a piston body 136 mounted on the elongate connecting rod 128 and positioned within a cylinder 138, wherein the cylinder 138 contains oil 140.

Upper and lower working chambers 142, 144 are defined within the cylinder 138, and a sealing arrangement 146 is provided between the piston body 136 and cylinder 138 to prevent or least minimise leakage of oil 140 passed the piston 136. An orifice 148 is provided through the wall portion of the cylinder 138 in the region of the upper chamber 142, and an orifice 150 is provided through the wall portion of the cylinder 138 in the region of the lower chamber 144. Accordingly, movement of the piston 136 will cause oil 140 to be displaced to and from the cylinder 138 via the respective orifices 148, 150.

The power take-off assembly 134 further comprises a fluid driven device 151, in this case a hydraulic motor, adapted to be driven by the oil 140 which is displaced from the cylinder 138 by movement of the piston 136. The hydraulic motor 151 produces rotational shaft work which in embodiments of the invention is used to drive an electric generator (not shown). Fluid conduits 152, 154 extend between respective orifices 148, 150 to provide fluid communication between the cylinder 138 and the hydraulic motor 151.

The pressure of the gas 132 within the cylinder 130 is greater than the local ambient pressure of the water 12. The arrangement is permitted by isolating the gas pressure from acting directly against the wave actuated member 116, which is contrary to previously proposed systems. The gas pressure may be in the region of 200 bar and will vary during stroking motion of the displaceable member 126.

The surface of the wave actuated member 116 which is exposed to water 12 is larger than the surface area of the displaceable member 126 which is exposed to the gas 132. This arrangement is permitted by virtue of the high gas pressure maintained within the cylinder 130 and enables the overall structural volume of the apparatus 110 to be minimised.

The apparatus 110 further comprises means for varying the volume of the gas 132 within cylinder 130 to permit the effective gas spring constant to be varied and selected in accordance with specific conditions. Specifically, the gas spring constant may be varied to effect changes in the natural frequency of the apparatus 110 to coincide with, for example, the dominant frequency of passing surface waves. This permits resonant operation of the apparatus 110 and thus maximises the energy which can be extracted from the wave motion.

The gas volume is varied by varying the level of oil 140a which is surmounted by the gas 132. The oil level is varied by delivering or discharging the fluid 140a to and from the cylinder 130. In the embodiment shown the fluid 140a is bled from the power take-off assembly 134 via a conduit 156. Control means (not shown) are provided to control the flow of the fluid 140a to and from the cylinder 130.

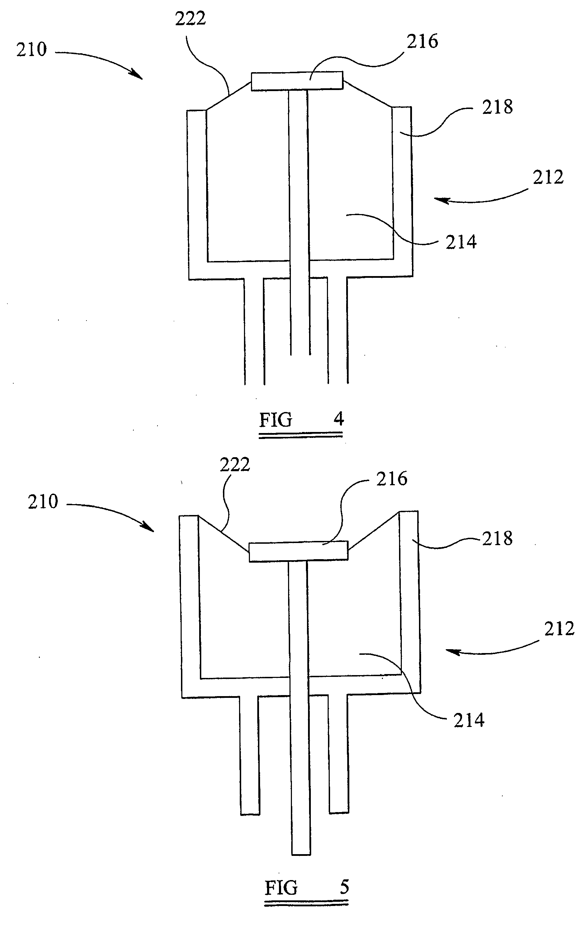

Reference is now made to Figures 4 and 5 of the drawings in which there is shown part of an apparatus for converting energy from waves in accordance with an alternative embodiment of the present invention.

The apparatus, generally identified by reference numeral 210, is shown in different configurations in Figures 4 and 5. It should be understood that the apparatus 210 is similar to the apparatus 110 shown in Figure 3 and as such like components share like reference numerals, incremented by 100. Additionally, it should be noted that only the upper portion of the apparatus 210 is shown for clarity as the lower portion is identical to that shown in Figure 3.

The apparatus 210 comprises a wave actuated assembly 212 which incorporates an enclosed evacuated chamber 214 defined by a wave actuated member 216 and a fixed member 218. The outer dimension of the wave actuated member 218 is smaller than the inner dimension of the fixed member 218. A flexible sealing member 222 extends between the peripheral surface of the wave actuated member 216 and the fixed member 218 to fluidly isolate the chamber 214 from the body of water. Accordingly, the present arrangement shown in Figures 4 and 5 permits the wave actuated member 216 to stroke both externally and internally of the fixed member 218.

The present invention as described in the exemplary embodiments above has significant advantages over previously proposed systems. For example, the present invention provides an apparatus which is significantly lighter than known arrangements and as such is capable of having a broader response range in view of the reduced inertia. Additionally, the structural volume of the apparatus is significantly smaller than known systems.

It should be understood that the embodiments described above are merely exemplary and that various modifications may be made thereto without departing from the scope of the invention. For example, the wave actuated members and displaceable members may be mounted in any suitable relative orientation, such as side-by-side. Additionally, the disclosed apparatus may be utilised in an inverted position. Furthermore, any suitable sealing arrangement may be utilised between the wave actuated member and fixed member of the wave actuated assembly. Additionally, the various features and arrangements presented in a single described embodiment may be utilised in other embodiments.

## Claims

1. An apparatus (10) for converting energy from wave motion in water, said apparatus comprising:
a wave activated assembly (20) comprising an enclosed chamber (22) and a wave actuated member (24) defining a wall portion of said chamber, wherein said wave actuated member (24) is adapted to be displaced in response to wave motion to vary the volume of the enclosed chamber (22);
a motion control assembly (30) comprising a displaceable member (32) coupled to the wave actuated member (24) and forcing means adapted to apply a force on the displaceable member (32); and
a power take off assembly (56) operable in response to movement of the wave actuated member, **characterised in that** the enclosed chamber is an evacuated chamber defining a vacuum or partial vacuum, such that the pressure within said enclosed chamber is lower than the ambient pressure, eliminating or substantially minimizing any gas spring effect being established within the enclosed chamber during stroking motion of the wave actuated member.

2. The apparatus according to claim 1, wherein the wave actuated member (24) and displaceable member (32) are coupled via a connecting member and/or the apparatus comprises a reference member, wherein said reference member and the wave actuated member collectively define the enclosed chamber.

3. The apparatus according to claim 1 or claim 2, wherein the forcing means is adapted to apply a variable force on the displaceable member (32) and/or the forcing means is adapted to apply a force which is variable in response to movement of said displaceable member.

4. The apparatus according to any preceding claim, wherein the motion control assembly (30) comprises a primary chamber (38), wherein the displaceable member defines a wall portion of said primary chamber such that movement of said displaceable member varies the volume of said primary chamber and optionally, the primary chamber is adapted to receive a fluid such that motion of the displaceable member acts against the fluid, and vice versa, wherein the fluid and displaceable member form part of a fluid spring means.

5. The apparatus according to claim 4, wherein the fluid spring means comprises a gas spring, in which gas is directly or indirectly compressed and expanded by movement of the displaceable member (32).

6. The apparatus according to claim 5, wherein the displaceable member (32) directly engages the gas or indirectly engages the gas via a substantially incompressible fluid.

7. The apparatus according to any of the preceding claims, wherein the apparatus is adapted to maintain the gas pressure elevated above the local ambient pressure acting on the wave activated member and/or the surface area of the wave actuated member is larger than the surface area of the displaceable member (32).

8. The apparatus according to any of the preceding claims, wherein the forcing means comprises a dynamically controlled hydraulic spring, in which hydraulic fluid is selectively and controllably driven against the displaceable member to simulate a spring force acting on said member and optionally further comprising a drive arrangement for driving hydraulic fluid against the displaceable member (32).

9. The apparatus according to any preceding claim, wherein a controller is adapted to receive input signals providing data relating to the state of the apparatus, and utilise this data to control the forcing means in the desired manner.

10. The apparatus according to any preceding claim, wherein the power take off assembly (56) comprises a piston assembly incorporating a piston (28) slidably mounted within a cylinder (34), wherein the piston is coupled to the wave actuated member (24) to move therewith and optionally a fluid is provided within the cylinder such that motion of the piston will cause fluid to be displaced to and from the cylinder and optionally the power take off assembly further comprises an external mechanical assembly adapted to be driven by fluid displaced from the cylinder.

11. The apparatus according to claim 11, wherein the piston (28) of the power take-off assembly (56) may define the displaceable member of the motion control device.

12. The apparatus according to any preceding claim, further comprising inertia compensation means adapted to compensate for inertia within the apparatus.

13. The apparatus according to any preceding claim, wherein the forcing means comprises a gas spring and the controller is configured to control the flow of a fluid to and from the gas spring in order to vary the volume of gas and thereby the effective gas spring constant to permit a natural frequency of the apparatus to be selected to coincide with an ambient forcing frequency.

14. The apparatus according to any preceding claim, wherein the motion control assembly comprises a controller adapted to control the forcing means and the controller is adapted to control the forcing means to permit a natural frequency of the apparatus to be selected to coincide with an ambient forcing frequency; and the surface area of the wave actuated member is larger than the surface area of the displacable member

15. A method of converting energy from wave motion in water, said method comprising the steps of:
providing an apparatus (10) according to any of claims 1 to 15 and submerging at least a portion of the apparatus within water experiencing wave motion;
permitting the wave actuated member (24) to move in response to wave motion;
extracting energy via the power take off assembly (56), and
controlling the forcing means to permit a natural frequency of the apparatus to be selected to coincide with an ambient forcing frequency.

## Patentansprüche

1. Vorrichtung (10) zum Wandeln von Energie aus einer Wellenbewegung im Wasser, wobei die Vorrichtung umfasst:
eine wellenaktivierte Anordnung (20), umfassend eine geschlossene Kammer (22) und ein wellenbetätigtes Glied (24), welches einen Wandteil der Kammer definiert, wobei das wellenbetätigte Glied (24) ausgebildet ist, um als Reaktion auf eine Wellenbewegung verstellt zu werden, um das Volumen der geschlossenen Kammer (22) zu ändern;
eine Bewegungssteuerungsanordnung (30), umfassend ein verstellbares Glied (32), welches mit dem wellenbetätigten Glied (24) verbunden ist, und Betätigungsmittel, welche ausgebildet sind, um eine Kraft auf dem verstellbaren Glied (32) auszuüben; und
eine Abtriebsanordnung (56), welche als Reaktion auf eine Bewegung des wellenbetätigten Glieds wirksam ist, **dadurch gekennzeichnet, dass** die geschlossene Kammer eine evakuierte Kammer ist, welche ein Vakuum oder ein partielles Vakuum definiert, so dass der Druck innerhalb der geschlossenen Kammer kleiner als der Umgebungsdruck ist, wodurch jegliche Gasfederwirkung, welche sich innerhalb der geschlossenen Kammer während der Hubbewegung des wellenbetätigten Glieds einstellen sollte, eliminiert oder im Wesentlichen minimiert wird.

2. Vorrichtung nach Anspruch 1, wobei das wellenbetätigte Glied (24) und das verstellbare Glied (32) über einem Verbindungsglied verbunden sind, und/oder die Vorrichtung ein Referenzglied umfasst, wobei das Referenzglied und das wellenbetätigte Glied zusammen die geschlossene Kammer definieren.

3. Vorrichtung nach Anspruch 1 oder Anspruch 2, wobei die Betätigungsmittel ausgebildet sind, um eine variable Kraft auf dem verstellbaren Glied (32) auszuüben, und/oder die Betätigungsmittel ausgebildet sind, um eine Kraft auszuüben, welche sich als Reaktion auf die Bewegung des verstellbaren Glieds ändert.

4. Vorrichtung nach einem der vorhergehenden Ansprüche, wobei die Bewegungssteueranordnung (30) eine Hauptkammer (38) umfasst, wobei das verstellbare Glied einen Wandteil der Hauptkammer definiert, so dass die Bewegung des verstellbaren Glieds das Volumen der Hauptkammer verändert, und, optional, dass die Hauptkammer ausgebildet ist, um ein Fluid zu empfangen, so dass die Bewegung des verstellbaren Glieds gegen das Fluid wirkt, und umgekehrt, wobei das Fluid und das verstellbare Glied Teil eines Fluidfedermittels sind.

5. Vorrichtung nach Anspruch 4, wobei das Fluidfedermittel eine Gasfeder umfasst, in welcher Gas unmittelbar oder mittelbar durch die Bewegung des verstellbaren Glieds (32) verdichtet und ausgedehnt wird.

6. Vorrichtung nach Anspruch 5, wobei das verstellbare Glied (32) auf das Gas unmittelbar einwirkt oder mittelbar auf das Gas über ein im Wesentlichen nicht komprimierbares Fluid einwirkt.

7. Vorrichtung nach einem der vorhergehenden Ansprüche, wobei die Vorrichtung ausgebildet ist, um eine erhöhten Gasdruck aufrechtzuerhalten, welcher über dem lokalen Umgebungsdruck liegt, welcher auf das wellenbetätigte Glied wirkt und/oder wobei die Oberfläche des wellenbetätigten Glieds größer als die Oberfläche des verstellbaren Glieds (32) ist.

8. Vorrichtung nach einem der vorhergehenden Ansprüche, wobei die Betätigungsmittel eine dynamisch gesteuerte hydraulische Feder umfassen, in welcher ein hydraulisches Fluid selektiv und kontrollierbar gegen das verstellbare Glied getrieben ist, um eine auf das Glied wirkende Federkraft zu simulieren, und ferner umfassend, optional, eine Antriebsanordnung zum Antreiben eines hydraulischen Fluids gegen das verstellbare Glied (32).

9. Vorrichtung nach einem der vorhergehenden Ansprüche, wobei ein Kontroller ausgebildet ist, um einkommende Signale zu empfangen, welche Daten bezüglich des Zustands der Vorrichtung bereitstellen, und um diese Daten zu verwenden, um die Betätigungsmittel in der gewünschten Weise zu steuern.

10. Vorrichtung nach einem der vorhergehenden Ansprüche, wobei die Abtriebsanordnung (56) eine Kolbenanordnung umfasst, welche einen in einem Zylinder (34) gleitend gehalterten Kolben (28) einschließt, wobei der Kolben mit dem wellenbetätigten Glied (24) verbunden ist, um sich zusammen mit diesem zu bewegen, und wobei, optional, innerhalb des Zylinders ein Fluid vorgesehen ist, so dass die Bewegung des Kolbens eine Verstellung des Fluids zu und von dem Zylinder verursacht, und wobei, optional, die Abtriebsanordnung ferner eine äußere mechanische Anordnung umfasst, welche ausgebildet ist, um durch das aus dem Zylinder verdrängte Fluid angetrieben zu werden.

11. Vorrichtung nach Anspruch 10, wobei der Kolben (28) der Abtriebsanordnung (56) ein verstellbares Glied der Bewegungssteuerungsvorrichtung definieren kann.

12. Vorrichtung nach einem der vorhergehenden Ansprüche, ferner umfassend Trägheitskompensierungsmittel, welche zum Kompensieren von Trägheiten innerhalb der Vorrichtung ausgebildet sind.

13. Vorrichtung nach einem der vorhergehenden Ansprüche, wobei die Betätigungsmittel eine Gasfeder umfassen, und der Kontroller zum Steuern des Durchsatzes eines Fluids zur und von der Gasfeder konfiguriert ist, um das Volumen des Gases, und somit die effektive Gasfederkonstante zu ändern, um eine natürliche Frequenz der Vorrichtung so auszuwählen, dass sie mit einer Umgebungserregerfrequenz zusammenfällt.

14. Vorrichtung nach einem der vorhergehenden Ansprüche, wobei die Bewegungssteueranordnung einen Kontroller umfasst, welcher ausgebildet ist, um die Betätigungsmittel zu steuern, und wobei der Kontroller ausgebildet ist, um die Betätigungsmittel so zu steuern, dass eine natürliche Frequenz der Vorrichtung so ausgewählt wird, dass sie mit einer Umgebungserregerfrequenz zusammenfällt; und die Oberfläche des wellenbetätigten Glieds größer als die Oberfläche des verstellbaren Glieds ist.

15. Verfahren zum Wandeln der Energie aus der Wellenbewegung im Wasser, wobei das Verfahren die folgenden Schritte umfasst:
Bereitstellen einer Vorrichtung (10) nach einem der Ansprüche 1 bis 15, und Eintauchen zumindest eines Teils der Vorrichtung im Wasser, in dem eine Wellenbewegung stattfindet;
Erlauben, dass das wellenbetätigte Glied (24) sich als Reaktion auf die Wellenbewegung bewegt;
Gewinnen von Energie durch die Abtriebsanordnung (56), und
Steuern der Betätigungsmittel, um eine natürliche Frequenz der Vorrichtung so auszuwählen, dass sie mit der Umgebungserregerfrequenz zusammenfällt.

## Revendications

1. Appareil (10) permettant de convertir une énergie à partir du mouvement de vagues dans de l'eau, ledit appareil comprenant :
un ensemble activé par les vagues (20) comprenant une chambre fermée (22) et un élément actionné par les vagues (24) définissant une partie paroi de ladite chambre, dans lequel ledit élément actionné par les vagues (24) est conçu pour être déplacé en réaction à un mouvement des vagues afin de faire varier le volume de la chambre fermée (22) ;
un ensemble de commande de mouvement (30) comprenant un élément déplaçable (32) couplé à l'élément actionné par les vagues (24) et un moyen d'application de force conçu pour appliquer une force sur l'élément déplaçable (32) ; et
un ensemble de prélèvement d'énergie (56) pouvant fonctionner en réaction au déplacement de l'élément actionné par les vagues, **caractérisé en ce que** la chambre fermée est une chambre sous vide définissant un vide ou un vide partiel, de telle manière que la pression au sein de ladite chambre fermée est inférieure à la pression ambiante, en éliminant ou en réduisant de manière substantielle un quelconque effet de ressort gazeux créé au sein de la chambre fermée pendant un mouvement de frappe de l'élément actionné par les vagues.

2. Appareil selon la revendication 1, dans lequel l'élément actionné par les vagues (24) et l'élément déplaçable (32) sont couplés via un élément de raccordement et/ou l'appareil comprend un élément de référence, dans lequel ledit élément de référence et l'élément actionné par les vagues définissent de manière collective la chambre fermée.

3. Appareil selon la revendication 1 ou 2, dans lequel le moyen d'application de force est conçu pour appliquer une force variable sur l'élément déplaçable (32) et/ou le moyen d'application de force est conçu pour appliquer une force qui est variable en réaction au déplacement dudit élément déplaçable.

4. Appareil selon l'une quelconque des revendications précédentes, dans lequel l'ensemble de commande de mouvement (30) comprend une chambre primaire (38), dans lequel l'élément déplaçable définit une partie paroi de ladite chambre primaire de telle manière qu'un déplacement dudit élément déplaçable fait varier le volume de ladite chambre primaire et éventuellement, la chambre primaire est conçue pour accueillir un fluide de telle manière qu'un mouvement de l'élément déplaçable agit à l'encontre dudit fluide, et inversement, dans lequel le fluide et l'élément déplaçable forment une partie d'un moyen formant ressort à fluide.

5. Appareil selon la revendication 4, dans lequel le moyen formant ressort à fluide comprend un ressort à gaz, dans lequel du gaz est comprimé directement ou indirectement et est expansé par un déplacement de l'élément déplaçable (32).

6. Appareil selon la revendication 5, dans lequel l'élément déplaçable (32) vient en prise directement avec le gaz ou vient en prise indirectement avec le gaz via un fluide essentiellement incompressible.

7. Appareil selon l'une quelconque des revendications précédentes, dans lequel l'appareil est conçu pour maintenir la pression de gaz au-dessus de la pression ambiante locale agissant sur l'élément activé par les vagues, et/ou la surface de contact de l'élément activé par les vagues est supérieure à la surface de contact de l'élément déplaçable (32).

8. Appareil selon l'une quelconque des revendications précédentes, dans lequel le moyen d'application de force comprend un ressort hydraulique commandé de manière dynamique, au sein duquel du fluide hydraulique est entraîné de manière sélective et commandable à l'encontre de l'élément déplaçable afin de simuler une force de ressort agissant sur ledit élément et comprenant éventuellement en outre un agencement d'entraînement permettant d'entraîner un fluide hydraulique à l'encontre de l'élément déplaçable (32).

9. Appareil selon l'une quelconque des revendications précédentes, dans lequel un dispositif de commande est conçu pour recevoir des signaux d'entrée fournissant des données concernant l'état de l'appareil, et utiliser lesdites données pour commander le moyen d'application de force de la manière souhaitée.

10. Appareil selon l'une quelconque des revendications précédentes, dans lequel l'ensemble de prélèvement d'énergie (56) comprend un ensemble formant piston incorporant un piston (28) monté coulissant au sein d'un vérin (34), dans lequel le piston est couplé à l'élément actionné par les vagues (24) afin de se déplacer avec celui-ci et éventuellement un fluide est fourni au sein du vérin de telle manière qu'un mouvement du piston va provoquer un déplacement du fluide vers et en provenance du vérin et éventuellement l'ensemble de prélèvement d'énergie comprend en outre un ensemble mécanique externe conçu pour être entraîné par du fluide déplacé en provenance du vérin.

11. Appareil selon la revendication 10, dans lequel le piston (28) de l'ensemble de prélèvement d'énergie (56) peut définir l'élément déplaçable du dispositif de commande de mouvement.

12. Appareil selon l'une quelconque des revendications précédentes, comprenant en outre un moyen de compensation d'inertie conçu pour compenser une inertie au sein dudit appareil.

13. Appareil selon l'une quelconque des revendications précédentes, dans lequel le moyen d'application de force comprend un ressort à gaz et le dispositif de commande est configuré pour commander la circulation d'un fluide vers et en provenance du ressort à gaz afin de faire varier le volume de gaz et ainsi la constante effective de ressort à gaz afin de permettre une sélection d'une fréquence naturelle de l'appareil qui coïncide avec une fréquence ambiante d'application de force.

14. Appareil selon l'une quelconque des revendications précédentes, dans lequel l'ensemble de commande de mouvement comprend un dispositif de commande conçu pour commander le moyen d'application de force et le dispositif de commande est conçu pour commander le moyen d'application de force afin de permettre une sélection d'une fréquence naturelle de l'appareil qui coïncide avec une fréquence ambiante d'application de force ; et
la surface de contact de l'élément actionné par les vagues est supérieure à la surface de contact de l'élément déplaçable.

15. Procédé de conversion d'énergie à partir du mouvement de vagues dans de l'eau, ledit procédé comprenant les étapes consistant à :
fournir un appareil (10) selon l'une quelconque des revendications 1 à 15 et immerger au moins une partie de l'appareil dans de l'eau soumise à un mouvement de vagues ;
permettre à l'élément actionné par les vagues (24) de se déplacer en réaction à un mouvement de vagues ;
extraire de l'énergie via l'ensemble de prélèvement d'énergie (56) ; et
commander le moyen d'application de force afin de permettre une sélection d'une fréquence naturelle de l'appareil qui coïncide avec une fréquence ambiante d'application de force.
